(19) Europäisches Patentamt
European Patent Office
Office européen des brevets

(11) EP 3 229 988 B1

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(21) Anmeldenummer: **15805201.9**

(22) Anmeldetag: **07.12.2015**

(51) Int Cl.:
***B21D 22/02*** (2006.01) ***C22F 1/00*** (2006.01)

(86) Internationale Anmeldenummer:
**PCT/EP2015/078868**

(87) Internationale Veröffentlichungsnummer:
**WO 2016/091824 (16.06.2016 Gazette 2016/24)**

(54) **VERFAHREN ZUR HERSTELLUNG VON ELEKTRODENFOLIEN FÜR KONDENSATOREN, ELEKTRODENFOLIEN UND KONDENSATOREN MIT DEN ELEKTRODENFOLIEN**

PROCESS FOR THE MANUFACTURE OF ELECTRODE FOILS FOR CAPACITORS, ELECTRODE FOILS AND CAPACITORS WITH THE ELECTRODE FOILS

PROCÉDÉ DE FABRICATION D'ÉLECTRODE FEUILLES POUR CONDENSATEURS, DES FEUILLES D'ÉLECTRODE ET CONDENSATEURS AVEC LES FEUILLES DE ÉLECTRODE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2014 DE 102014118222**

(43) Veröffentlichungstag der Anmeldung:
**18.10.2017 Patentblatt 2017/42**

(73) Patentinhaber: **TDK Electronics AG**
**81671 München (DE)**

(72) Erfinder: **KUZECI, Erkan**
**27010 Ceranova (IT)**

(74) Vertreter: **Epping - Hermann - Fischer**
**Patentanwaltsgesellschaft mbH**
**Schloßschmidstraße 5**
**80639 München (DE)**

(56) Entgegenhaltungen:
**US-A1- 2012 219 817**

EP 3 229 988 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Aus der US 2012/0219817 A1 sind Aluminiumfolien für Lithium-Ionen-Energiespeicher und Verfahren zur Herstellung solcher bekannt. Die Folien weisen Ausnehmungen auf, damit Lithium-Ionen passieren können.

Elektrodenfolien für Kondensatoren, beispielsweise Elektrolytkondensatoren, müssen eine möglichst große Oberfläche aufweisen, um die Kapazität der Kondensatoren zu erhöhen. Die Marktanfrage tendiert dabei zu Elektrolytkondensatoren mit zunehmend höheren Spannungen (bis zu 1200 $V_f$). Gleichzeitig müssen die Metallfolien als Elektroden auch eine hohe mechanische Beständigkeit aufweisen, um den hohen Geschwindigkeiten der Aufwickelmaschine während der Herstellung der Kondensatoren Stand zu halten.

Zur Erhöhung der Oberfläche der Elektrodenfolien werden Metallfolien, die beispielsweise aus einem Ventilmetall, wie zum Beispiel Aluminium bestehen können, mittels eines elektrochemischen Ätzverfahrens derart behandelt, dass die Oberfläche vergrößert wird. Dieses Verfahren hat den Nachteil, dass die Metallfolien während des Ätzvorgangs bis zu 30 % an Gewicht verlieren können, sodass deren mechanische Beständigkeit im Vergleich zu ungeätzten Folien vermindert ist. Gleichzeitig führt der elektrochemische Ätzprozess zu einem hohen Verbrauch an Säuren und bedingt große Mengen an flüssigen, sauren Abfällen.

Der Ätzvorgang führt zu irregulären Strukturen und Kanälen auf der Oberfläche der Metallfolien. Um ein möglichst kontrolliertes Ätzen der Metallfolien zu ermöglichen, werden häufig hochreine Metallfolien, die eine Reinheit von > 99 %, beispielsweise Aluminiumfolien, verwendet, die auf ihrer Oberfläche eine hohe kristalline Textur, insbesondere eine hohe kubische Textur ({100}<001>) aufweisen. Diese kubische Textur ist wichtig, da entlang der kristallographischen <001>-Richtung bevorzugt das Ätzen stattfindet. Die Herstellung der Metallfolien mit hoher kristalliner, insbesondere kubischer Textur, ist allerdings sehr zeit- und kostenaufwändig und erfordert aufwändige Walzschritte bei verschiedenen Temperaturen, die als letztes durch einen Glühprozess zur Bildung einer weitgehend kubischen Textur führen können.

Eine Aufgabe der vorliegenden Erfindung besteht darin, ein Verfahren zur Herstellung von Elektrodenfolien für Kondensatoren bereitzustellen, das bezüglich der oben genannten Nachteile verbessert ist. Weitere Aspekte der vorliegenden Erfindung sind auf verbesserte Elektrodenfolien für Kondensatoren sowie auf Kondensatoren mit diesen Elektrodenfolien gerichtet.

Dazu werden ein Verfahren zur Herstellung von Elektrodenfolien und Elektrodenfolien für Kondensatoren gemäß den unabhängigen Ansprüchen angegeben. Abhängige Ansprüche geben vorteilhafte Ausgestaltungen an.

Gegenstand einer Ausführungsform der vorliegenden Erfindung ist ein Verfahren zur Herstellung von Elektrodenfolien für Kondensatoren, umfassend die Verfahrensschritte:

A) Bereitstellen einer Metallfolie,

B) Übertragen von auf einem Stempel befindlichen Mikrostrukturen auf eine Hauptoberfläche der Metallfolie durch Umformen.

C) Erzeugen einer Metall-Oxidschicht auf der Metallfolie, wobei

- die Elektrodenfolien nicht durchgebrochen werden,
- im Verfahrensschritt B) die Mikrostrukturen mit Gräben mit einem Aspektverhältnis von zumindest 4:1 erzeugt werden und
- im Verfahrensschritt B) die Gräben mit einer Tiefe von zumindest 20 $\mu$m und einer Breite von höchstens 5$\mu$m erzeugt werden.

Unter Umformen wird dabei jedes Verfahren verstanden, bei dem die Metallfolie plastisch in eine andere Form gebracht wird. Insbesondere bezeichnet Umformen auch einen Prägevorgang, bei dem mittels Druck die auf einem Stempel befindlichen Mikrostrukturen auf eine Hauptoberfläche der Metallfolie übertragen werden.

Während des Umformvorgangs, des Prägens, kann beispielsweise der Stempel gegen die Hauptoberfläche der Metallfolie gepresst werden oder umgekehrt die Metallfolie, beispielsweise zusammen mit einem die Folie unterstützenden Substrat gegen den Stempel gedrückt werden. Möglich ist auch eine Relativbewegung des Stempels und der Metallfolie aufeinander zu während des Umformvorgangs.

Im Gegensatz zu herkömmlichen Ätzverfahren fallen bei der Übertragung der Mikrostrukturen von dem Stempel auf die Hauptoberfläche der Metallfolie durch Umformen keine Abfälle, insbesondere keine Flüssigabfälle an. Ein weiterer Vorteil besteht darin, dass im Gegensatz zum Ätzvorgang die Metallfolie keine Substanz verliert und somit gegenüber geätzten Metallfolien mechanisch stabiler sein kann.

Die mittels des Umformverfahrens, beispielsweise Prägens, übertragenen Mikrostrukturen sind insbesondere Strukturen auf der Oberfläche der Metallfolie, beispielsweise Vertiefungen und Erhebungen. Diese Mikrostrukturen bedingen besonders vorteilhaft eine Erhöhung der spezifischen Oberfläche der Metallfolie, sodass Kondensatoren mit diesen Metallfolien als Elektroden eine erhöhte Kapazität aufweisen.

Gemäß einer weiteren Ausführungsform eines erfindungsgemäßen Verfahrens kann im Verfahrensschritt A)

eine Metallfolie umfassend oder bestehend aus einem Ventilmetall verwendet werden.

Ventilmetalle, bei denen mittels elektrochemischer Verfahren, beispielsweise anodischer Oxidation, eine Oxidschicht des Metalls auf der Metallfolie erzeugt werden kann, sind besonders gut als Elektroden für Kondensatoren geeignet, da die Oxidschicht des Metalls als Dielektrikum fungiert. Die Oxidschicht bedingt die Spannungsfestigkeit des Kondensators, wobei insbesondere auch mit der Dicke der Oxidschicht die Nennspannung des Kondensators besonders einfach eingestellt werden kann.

Als Ventilmetalle, auf denen mittels elektrochemischer Verfahren eine Oxidschicht des Metalls erzeugt werden kann, sind zum Beispiel Aluminium, Tantal, Niob, Mangan, Titan, Bismut, Antimon, Zink, Cadmium, Zirkonium, Wolfram, Zinn, Eisen, Silber und Silizium, bevorzugt Aluminium, Tantal und Niob und besonders weiter bevorzugt Aluminium.

Besonders bevorzugt ist Aluminium als Ventilmetall, da Aluminiummetallfolien besonders gut als Elektroden für Elektrolytkondensatoren, insbesondere Aluminium-Elektrolytkondensatoren eingesetzt werden können.

Bei dem erfindungsgemäßen Verfahren ist eine Metalloxidschicht auf der Metallfolie als Dielektrikum erzeugt werden kann. Dies kann, wie weiter oben bereits beschrieben, mittels elektrochemischer Verfahren, insbesondere anodischer Oxidation erfolgen, wenn Metallfolien umfassend oder bestehend aus einem Ventilmetall verwendet werden.

Aufgrund der erhöhten Stabilität von Metallfolien, die mittels des erfindungsgemäßen Verfahrens hergestellt werden, können auf diesen Metallfolien z. B. für Hochvoltanwendungen mit bis zu 20 mal erhöhter Oberfläche gegenüber den ungeformten Folien besonders einfach stabile Oxidschichten als Dielektrikum erzeugt werden.

Im Verfahrensschritt B) eines erfindungsgemäßen Verfahrens kann insbesondere die Metallfolie zwischen zwei Stempeln positioniert werden und damit die auf beiden Stempeln befindlichen Mikrostrukturen auf die beiden Hauptoberflächen der Metallfolie durch Umformen, zum Beispiel Pressen, übertragen werden.

Mittels eines derartigen Stempelverfahrens können besonders einfach beide Hauptoberflächen der Metallfolie durch Prägen mit einer erhöhten Oberfläche und mit Mikrostrukturen versehen werden.

Möglich ist es aber auch, dass lediglich eine der beiden Stempel die Mikrostrukturen aufweist, sodass durch diesen Pressvorgang lediglich auf einer Hauptoberfläche die Mikrostrukturen übertragen werden.

Gemäß einer anderen Variation eines erfindungsgemäßen Verfahrens kann dieses Verfahren als kontinuierliches Verfahren ausgebildet sein, wobei im Verfahrensschritt B) die Metallfolie zwischen zwei rotierenden Walzen als Stempel hindurchgeführt wird und dabei die Mikrostrukturen auf zumindest eine oder beide Hauptoberflächen der Metallfolie übertragen werden.

Mittels eines derartigen kontinuierlichen "Rolle-zu-Rolle"-Verfahrens können besonders einfach lange Bänder der Metallfolie in einem kontinuierlichen Verfahren ohne Unterbrechung mittels Umformens geprägt werden, wobei die Mikrostrukturen auf eine oder beide Hauptoberflächen der Metallfolie besonders einfach, schnell und damit auch kostengünstig übertragen werden können. Als Material für die Walze kommen beispielsweise keramische Werkstoffe, Spezialstähle oder aber Metalle wie Nickel, oder Chrom in Betracht, auf denen mittels Laserablation mit Femtosekundenlasern die Mikrostrukturen erzeugt wurden. Diese Laser können Mikrostrukturen mit einer Größe $< 5\ \mu m$ erzeugen.

Diese sehr kurzen Laserimpulse (< 100 ns) bedingen eine derart hohe Energiedichte, dass das Material der Walzen sublimiert, ohne dass das Material schmilzt, sodass kleinste Mikrostrukturen mit hohen Aspektverhältnissen auf den Walzen erzeugt werden können. Weiterhin ermöglicht die Laserablation auch das Übertragen von Mikrostrukturen auf gekrümmte Oberflächen, wie beispielsweise Walzen auf besonders einfache Art und Weise.

Weiterhin können die Stempel, mittels denen die Metallfolien geprägt werden, auch über das LIGA-Verfahren hergestellt werden. LIGA steht für Lithografie, Galvanoformung, und Abformung. Dieses Verfahren kann dazu verwendet werden, um auf Stempeln Mikrostrukturen auch in dreidimensionaler Anordnung mit einem hohen Aspekt-Verhältnis zu erzeugen.

Während des LIGA-Verfahrens kann ein fotosensitives Monomer, das typischerweise auf Acrylatbasis vorliegt, an ein elektrisch leitfähiges festes Substrat angebunden werden. Diese Monomerschicht wird dann durch eine Maske, die die zu erhaltenden Mikrostrukturen definiert, mit Strahlen hoher Energie, beispielsweise Röntgen- oder UV-Strahlen, bestrahlt, wobei die bestrahlten Bereiche der Monomerschicht polymerisieren, während in den nichtbestrahlten Bereichen nach wie vor die Monomere vorliegen (Negativresist). Mittels einer chemischen Entwicklerlösung können dann die nichtpolymerisierten Monomere entfernt werden, sodass eine mit den Mikrostrukturen versehene Polymerschicht auf dem elektrisch leitfähigen Substrat verbleibt. In einem nachfolgenden Elektroplattierprozess können dann beispielsweise Metalle wie Kobalt oder Nickel in die leeren Hohlräume der polymerisierten Schicht eingebracht werden. In einen finalen Schritt wird dann das strukturierte Polymer entfernt, sodass eine strukturierte Metallschicht verbleibt, die als Stempel für die erfindungsgemäßen Verfahren verwendet werden kann. Bezüglich des LIGA-Verfahrens wird beispielsweise auf die Veröffentlichung E. W. Becker, W. Ehrfeld, P. Hagmann, A. Mana, D. Münchmeier: "Fabrication of microstructures with high aspect ratios and great structural heights by synchrotron radiation lithography, galvano forming, and plastic molding (LIGA process); Microelectronic Engineering 4", Nummer 1, 1986, Seiten 35 bis 56 Bezug genommen. Dieses LIGA-Verfahren ermöglicht insbesondere die Herstellung von Metallstrukturen mit einer Höhe von einigen $100\ \mu m$, die in den Dimensionen Abweichungen von weniger als $0{,}1\ \mu m$ aufweisen. Als mögliche Metalle für die Stempel zur Anwendung in dem erfindungsgemäßen Verfahren können Kobalt, Nickel, Kupfer sowie auch Nickel/Eisen-Legierungen

verwendet werden.

Als Negativresist kann in einem LIGA-Verfahren beispielsweise der Fotolack SU-8 verwendet werden, der als Monomerkomponente ein Epoxidharz mit folgender Struktur mit insgesamt acht Epoxygruppen im Molekül aufweist:

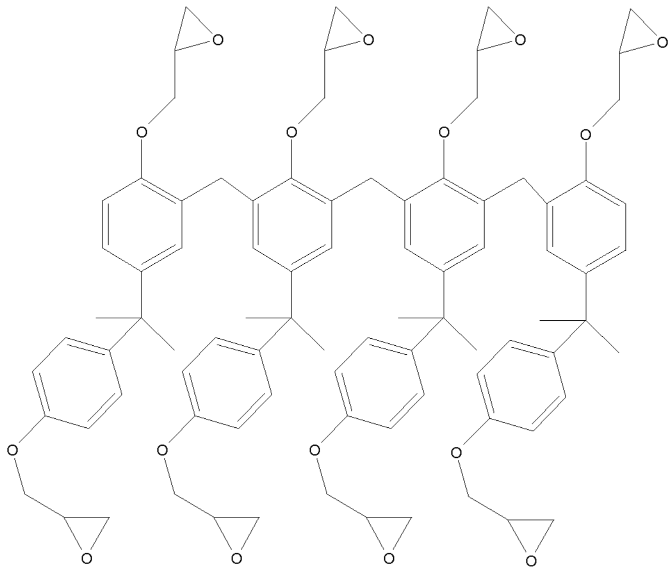

Dieses Monomer kann in einem Lösungsmittel, beispielsweise γ-Butyrolacton oder Cyclopentanon gelöst werden, wobei als fotoempfindliche Komponente eine Fotosäure verwendet wird, die bei Bestrahlung beispielsweise mit UV-Licht einer Wellenlänge von 365 nm eine Säure freisetzt. Diese Säure kann beispielsweise Triarylsulfonium-Hexafluoroantimonat sein, das unter Einwirkung von Bestrahlung eine Polymerisation im Epoxidharz in Gang setzt. Als Entwickler kann 1-Methoxy-2-Propanol-Acetat verwendet werden.

Bezüglich herkömmlicher Heißprägeverfahren wird auf die folgenden Veröffentlichungen vollinhaltich Bezug genommen: T. Mappes, M. Worgull, M. Heckele, J. Mohr "Submicron polymer structures with X-ray lithography and hot embossing", Microsyst. Technol. (2008), 14: 1721-1725; M. Worgull, M. Heckele "New aspects of simulation in hot embossing", Microsyst. Technol. (2004), 10:432-437; Christian Mehne: "Großformatige Abformung mikrostrukturierter Formeinsätze durch Heißprägen"; Dissertation, Universität Karlsruhe (TH) Fakultät für Maschinenbau, Universitätsverlag Karlsruhe 2007. Bei einer weiteren Ausführungsform eines erfindungsgemäßen Verfahrens können im Verfahrensschritt B) insbesondere regelmäßige Mikrostrukturen erzeugt werden.

Die Mikrostrukturen können dabei Strukturen mit einer definierten Tiefe beziehungsweise Erhebung in der Oberfläche bilden, wobei zwischen einzelnen Mikrostrukturen auf der Oberfläche der Metallfolie ebenfalls definierte Abstände vorhanden sind. Die Erhebungen beziehungsweise Vertiefungen in der Oberfläche für die Mikrostrukturen und auch die Abstände von benachbarten Mikrostrukturen zueinander können um maximal 15 %, bevorzugt maximal um weniger als 10 % und bevorzugt maximal weniger als um 5 % variieren. Insbesondere können die Abweichungen auch nur in der Größenordnung von 0,1 μm sein. Definierte, regelmäßige Mikrostrukturen lassen sich besonders einfach durch Umformverfahren, wie Prägen, in den Metallfolien erzeugen und erlauben damit eine besonders definierte Methode, um die Oberflächen der Elektrodenfolien gezielt zu erhöhen, ohne sich der Gefahr auszusetzen, dass es zu Durchbrüchen in der Metallfolie kommt. Dies ist ein großer Vorteil im Vergleich zu dem chemischen Ätzverfahren, die herkömmlicherweise angewandt werden.

Die Mikrostrukturen umfassen auch eine Vielzahl von Vertiefungen in der Metallfolie umfassen. Diese Vertiefungen können in der Aufsicht auf die Hauptoberfläche der Metallfolie entweder ovale, runde oder mehreckige Formen annehmen. Im Querschnitt können die Vertiefungen insbesondere auch Breiten aufweisen, die sich zum Inneren der Metallfolie hin verjüngen beziehungsweise die annähernd gleich bleiben (siehe auch die Figuren 2a und 4b).

Weiterhin werden im Verfahrensschritt B) Mikrostrukturen auf der Oberfläche der Metallfolie erzeugt, die Gräben umfassen, wobei die Gräben in definierten Abständen zueinander angeordnet sind. Insbesondere sind dabei Gräben mit einem Aspektverhältnis von zumindest 4:1 erzeugt werden (Aspektverhältnis = Verhältnis aus der Tiefe beziehungsweise Höhe einer Struktur zu ihrer kleinsten lateralen Ausdehnung, z. B. der Breite). Insbesondere betragen die Tiefe der Gräben 20 μm oder mehr und die Breite der Gräben höchstens 5 μm. Weiterhin können die Gräben auch Abstände voneinander haben, die höchstens 5 μm betragen.

Die erzeugten Mikrostrukturen können auch Mikrostrukturen unterschiedlicher Form umfassen, beispielsweise eine Kombination aus Gräben und Vertiefungen.

Dabei ist es bevorzugt, Mikrostrukturen mit möglichst großen Aspektverhältnissen, also möglichst kleiner Größe auf zumindest einer Hauptoberfläche der Metallfolie zu erzeugen, um eine möglichst große Oberfläche der Elektrodenfolien und damit eine verbesserte Kapazität der mit den Elektrodenfolien ausgestatteten Kondensatoren zu erreichen.

Die Erhebungen der Mikrostrukturen können dabei auch kleine Verbindungsstege zwischen benachbarten Mikrostrukturen aufweisen, um beispielsweise deren mechanische Stabilität zu erhöhen. Die Höhe beziehungsweise die Vertiefungen der Mikrostrukturen sowie deren Abstände zueinander können besonders einfach mittels der einem Fachmann geläufigen Rasterelektronenmikroskopie bestimmt werden.

Bei den erfindungsgemäßen Verfahren können im Verfahrensschritt B) insbesondere die Stempel bei einer Temperatur von unter 600°C, 500°C, oder 400°C, bis auf unter 320 °C, bevorzugt unter 200 °C, weiter bevorzugt < 100 °C gegen die Metallfolie gepresst werden, wobei die Temperatur auch Raumtemperatur betragen kann. Im Unterschied zu polymeren Substraten, auf denen mittels Nanoimprint beziehungsweise Heißprägen Mikrostrukturen erzeugt werden können, sind Metallfolien nicht thermoplastisch, wobei die Erfinder festgestellt haben, dass insbesondere bei Temperaturen von < 400 °C keine Legierungseffekte zwischen der Metallfolie und dem metallischen Stempel, beispielsweise einem Nickelstempel, auftreten.

Weiterhin können im Verfahrensschritt B) bei erfindungsgemäßen Verfahren die Stempel und die Metallfolie in Abhängigkeit von der Temperatur und der Prägeeinrichtung in einem sehr breiten Druckbereich gegeneinander gepresst werden. Die Erfinder haben festgestellt, dass bei Drücken im Bereich von 10 bis 100 MPa ein Prägen der Metallfolien besonders gut funktioniert.

Weiterhin besteht gemäß einer weiteren Variante eines erfindungsgemäßen Verfahrens die Möglichkeit, dass im Verfahrensschritt A) eine Metallfolie mit einer kristallinen, also insbesondere kubischen Textur von < 90 %, bevorzugt < 50 %, weiter bevorzugt ohne kubische Textur bereitgestellt wird.

Da es sich bei dem Umformen um ein mechanisches, also plastisches Umformen und Verformen der Metallfolien handelt, ist es nicht unbedingt notwendig, dass Metallfolien, insbesondere Aluminiumfolien, mit einer hohen kubischen Textur verwendet werden, entlang derer bevorzugt geätzt werden kann. Somit besteht die Möglichkeit bei Ausführungsformen von erfindungsgemäßen Verfahren, Metallfolien zu verwenden, die nicht aufwändigen Walzverfahren bei unterschiedlichen Temperaturen sowie Annealing-Prozeduren unterzogen werden, um eine hohe kristalline Textur auf der Oberfläche zu erzeugen. Daher können auch günstiger herzustellende Folien bei erfindungsgemäßen Verfahren eingesetzt werden. Prinzipiell können aber auch Folien mit hoher kubischer Textur verwendet werden.

Wenn Folien mit hoher kubischer Textur verwendet werden, kann der erfindungsgemäße Prozess des Umformens besser funktionieren. Bei herkömmlichen Ätzverfahren führen bereits die kleinsten Neigungswinkel der kubischen Texturoberfläche der Metallfolien zu unterschiedlichen Ätzergebnissen, während diese Neigungen der kubischen Texturoberfläche bei den Umformverfahren der vorliegenden Erfindung keine große Rolle spielen.

Die kristalline, insbesondere kubische Textur von Oberflächen von Metallfolien kann z. B. mittels der Rasterelektronenmikroskopie in Verbindung mit Electron Backscatter Diffraction (EBSD) bestimmt werden. Diese Verfahren können mit Rasterelektronenmikroskopen oder Transmissionselektronenmikroskopen durchgeführt werden und erlauben die ortsaufgelöste Ermittlung der Kristallsymmetrien der Oberfläche der Metallfolien. Bezüglich der Electron Backscatter Diffraction wird insbesondere auf die Veröffentlichung von F. J. Humphries: "Review grain and subgrain characterisation by electron backscatter diffraction", Journal of Material Science, Volume 36, Nr. 16, Seiten 3833 bis 3854, aus dem Jahre 2001, verwiesen.

Weiterhin kann im Verfahrensschritt A) eine Metallfolie mit einer Reinheit > 95 %, bevorzugt > 98 %, bereitgestellt werden, wobei die Reinheiten auch sehr hohe Werte von bis zu 99,9 % bis 99,99 % erreichen können.

Im Verfahrensschritt A) können insbesondere Metallfolien mit einer Dicke von zumindest 120 μm, bevorzugt zumindest 100 μm, am meisten bevorzugt zumindest 80 μm, bereitgestellt werden. Die Erfinder haben festgestellt, dass bei derartigen Mindestdicken besonders wirtschaftliche Ergebnisse bei erfindungsgemäßen Umformverfahren erzielt werden.

Gegenstand der vorliegenden Erfindung sind auch Elektrodenfolien, die gemäß der erfindungsgemäßen Verfahren hergestellt wurden, und die damit insbesondere auch eine Metallfolie mit regelmäßigen Mikrostrukturen auf zumindest einer Hauptoberfläche umfassen. Diese Mikrostrukturen sind, wie bereits beschrieben, geprägte Mikrostrukturen und weisen insbesondere definierte Tiefen beziehungsweise Erhebungen sowie definierte Abstände zwischen einzelnen benachbarten Mikrostrukturen auf. Die Variation der Höhen beziehungsweise der Vertiefungen der Mikrostrukturen sowie ihrer Abstände zueinander können dabei um maximal 20 %, bevorzugt 15 %, weiter bevorzugt 5 % variieren. Möglich sind auch Abweichungen im Bereich von 0,1 μm.

Ausführungsformen der erfindungsgemäßen Elektrodenfolien können eine Dicke von unter 100 μm, bevorzugt bis zu 88 μm aufweisen und bei Verwendung in Aluminium-Elektrolytkondensatoren als Elektrodenfolie eine Kapazität von etwa 0, 2 $\mu F/cm^2$ bei 900 Volt Formierung aufweisen.

Wie bereits oben beschrieben, ist es vorteilhaft, wenn die Metallfolie ein Ventilmetall, insbesondere die oben genannten Metalle, bevorzugt Aluminium, Tantal oder Niob umfasst. Für die Verwendung in Aluminium-Elektrolytkondensatoren sind insbesondere Aluminium-Metallfolien bevorzugt.

Die Mikrostrukturen umfassen Gräben mit einem Aspektverhältnis von zumindest 4:1. Die Tiefe der Gräben sind zumindest 20 $\mu$m und ihre Breite höchstens 5 $\mu$m wobei auch der Abstand einzelner Gräben zueinander höchstens 5 $\mu$m betragen kann.

Wie oben beschrieben, kann die Metallfolie eine kristalline, insbesondere kubische Textur von < 90 %, bevorzugt < 80 % oder sogar komplett texturlos sein, da eine kristalline Oberflächentextur für ein mechanisches Umformverfahren nicht notwendigerweise benötigt wird.

Vor dem Einsatz der Elektrodenfolien in einem Kondensator, insbesondere einem Elektrolytkondensator, kann über den Mikrostrukturen eine Metalloxidschicht als Dielektrikum, beispielsweise mittels anodischer Oxidation, erzeugt werden. Dies ist beispielsweise im Falle von Aluminium-Elektrodenfolien besonders einfach durch ein sogenanntes Formier-Verfahren möglich, das prinzipiell in vier Verfahrensschritte unterteilt werden kann.

In einem ersten Schritt, der Vorbehandlung, werden Aluminiumhydroxide durch Reaktion in einem wässrigen Medium, z. B. einem heißen Wasserbad gebildet. Dabei bildet sich ein komplexes Aluminiumhydroxyd, die sogenannte Boehmitschicht.

Diesem Verfahrensschritt schließt sich eine anodische Oxidation der Folie in neutralen Elektrolyten an, der die Boehmitschicht in $\gamma$-Aluminium umwandelt und eine weitere Oxidschicht direkt durch Oxidation von metallischem Aluminium erzeugt. Da die Umwandlung von metallischem Aluminium in Aluminiumoxid auch gleichzeitig eine Veränderung der Dichte des Materials bedingt (Dichte von Aluminium 2,7 g/m$^3$, Dichte von Aluminiumoxid 3,8 g/cm$^3$) werden während dieses Verfahrensschritts auch noch Sprünge und Hohlräume im Inneren der Oxidschicht erzeugt.

Daher werden in einem weiteren dritten Verfahrensschritt diese Defekte zuerst mit einem Elektrolyt benetzt (sogenannter Depolarisationsschritt) und dann mittels einer anodischen Polarisation, dem finalen vierten Formierschritt, diese Defekte ausgeheilt. In Abhängigkeit von der Formierspannung kann die Dicke der während der Formierung erzeugten Oxidschicht zunehmen, wobei die Zunahme in einem Verhältnis von 1 nm/ 1 Volt erfolgt. Beispielsweise kann eine Formierspannung von 560 V dann in einer Dicke der Oxidschicht von zirka 0,56 $\mu$m resultieren. Ein wesentlicher Vorteil des erfindungsgemäßen Verfahrens besteht darin, dass die Strukturen für unterschiedliche Spannungen d. h. unterschiedliche Oxidschichtdicken maßgeschneidert dimensioniert werden, damit die heranwachsenden Oxidschichten nicht zu einer Abnahme der spezifischen Oberfläche führen können.

Im Folgenden sollen Ausführungsbeispiele der Erfindung anhand von Figuren näher erläutert werden. Es zeigen:

| | |
|---|---|
| Die Figur 1a | eine mittels eines erfindungsgemäßen Verfahrens erzeugte Elektrodenfolie im Querschnitt mit Mikrostrukturen, |
| die Figur 1b | die entsprechenden Mikrostrukturen der Figur 1A in perspektivischer Ansicht, und |
| die Figur 1c | den Verfahrensschritt B) während dem ein Stempel als rotierende Walze auf eine Metallfolie gedrückt werden und dementsprechend die in Figur 1A und 1B gezeigten Gräben als Mikrostrukturen erzeugt werden, |
| Figur 2a | rasterelektronenmikroskopische Aufnahmen der Gräben, |
| Figur 2b | im Gegensatz zur Fig. 2a mit herkömmlichen Methoden geätzte Aluminiumfolie mit irregulären Oberflächenstrukturen, |
| Figur 3 | in perspektivischer Ansicht ein Heißprägeverfahren zur Herstellung der strukturierten Metallfolien, |
| Figur 4a | eine Variante eines erfindungsgemäßen Verfahrens als kontinuierliches Verfahren, wobei zwei Stempel als rotierende Rollen verwendet werden, |
| Figur 4b | rasterelektronenmikroskopische Aufnahmen von Mikrostrukturen, die mittels des Prägeverfahrens erzeugt wurden, und |
| Figur 5 | im Querschnitt einen Aluminium-Elektrolytkondensator mit einer erfindungsgemäßen Elektrodenfolie. |

Figur 1a zeigt im Querschnitt eine mittels eines erfindungsgemäßen Umform-Verfahrens geprägte Elektrodenfolie 1, wobei auf beiden Hauptoberflächen 1a, 1b die Mikrostrukturen 2 erzeugt wurden. Dabei ist zu erkennen, dass Gräben 2 auf beiden Hauptoberflächen gebildet wurden, wobei die Breite der Gräben 2b ähnlich groß ist wie der Abstand 2a zweier benachbarter Gräben zueinander. Die Breite der Gräben 2b sowie der Abstand 2a zweier benachbarter Gräben können auch unterschiedliche Dimensionen haben, wobei auch die Wände der Kanäle nicht unbedingt senkrecht zur

Folienebene sein müssen, sondern auch einen anderen Winkel zur Folienebene aufweisen können. Bei ersten Experimenten wurden mittels des erfindungsgemäßen Verfahrens bereits Gräben mit einer Tiefe 2c von zumindest 20 μm und einer Breite 2b von höchstens 5 μm sowie einem Abstand zueinander 2a von höchstens 5 μm erzeugt. Figur 1a kann auch entnommen werden, dass die Dicke der Metallfolie größer ist als die Tiefe der Mikrostrukturen, so dass im Querschnitt der Folie im Inneren 1c der Folie ein ungeprägter Bereich 1c ohne Mikrostrukturen vorhanden ist, der der Folie eine hohe mechanische Stabilität verleiht.

Figur 1b zeigt in perspektivischer Ansicht den Verlauf der Gräben zueinander. Beiden Figuren 1a und 1b kann entnommen werden, dass die Breite der Gräben zum Inneren der Elektrodenfolie hin annähernd gleich bleibt.

Figur 1C zeigt schematisch wie mittels einer Walze als Stempel 3 die Mikrostrukturen 2 auf die Elektrodenfolie 1 übertragen werden.

Figur 2a zeigt typische rasterelektronenmikroskopische Aufnahmen der Gräben 2 einer 120 μm dicken AluminiumElektrodenfolie sowohl in der Aufsicht wie in perspektivischer Ansicht. Deutlich ist die regelmäßige Anordnung der Mikrostrukturen zu erkennen, wobei auch zwischen einzelnen Gräben Stege 2d verlaufen können, die insbesondere für eine Erhöhung der mechanischen Stabilität der Mikrostrukturen sorgen können. Die Tiefe der Gräben beträgt 20 μm und deren Breite 5μm. Der Abstand benachbarter Gräben liegt auch etwa in der Größenordnung von 5 μm.

Figur 2b zeigt im Gegensatz zu Figur 2a Tunnel 2e, die mittels eines Vorätzschritts im Rahmen herkömmlicher Ätzverfahren in Aluminium-Elektrodenfolien gebildet werden können. Deutlich ist die irreguläre Anordnung der Tunnel 2e zu erkennen, die im klaren Gegensatz zu den regulären, definierten Mikrostrukturen der geprägten Folien in der Figur 2a steht.

Figur 3 zeigt in perspektivischer, schematischer Ansicht ein Heißpräge-Verfahren, bei dem auf einer Elektrodenfolie 1 Mikrostrukturen 2 erzeugt werden. Das Heißpräge-Verfahren kann in vier Unterschritte während eines erfindungsgemäßen Umformungsverfahrens für den Verfahrensschritt B) unterteilt werden. Diese Verfahrensschritte sind:

B1) Aufheizen insbesondere der Metallfolie 1 auf die Prägetemperatur, wobei die Prägetemperatur bevorzugt unter 400 °C, wie bereits oben beschrieben, beträgt.

B2) Isothermes Prägen durch Aufdrücken des Stempels 3 auf die Metallfolie 1. Während dieses Verfahrensschritts wird insbesondere nicht die Temperatur der Metallfolie 1 verändert.

B3) Abkühlen der Anordnung aus dem Stempel 3 und der geprägten Metallfolie 1, wobei der Druck aufrechterhalten wird und

B4) Entformen der Anordnung durch Öffnen des Stempels und Ablösen der geprägten Metallfolie vom Stempel.

Im Falle einer Prägung auf nur einer Hauptoberfläche der Metallfolie (Aluminiumelektrodenfolie) kann ein Stück einer Aluminiumfolie 1 mit einer Dicke, die größer ist als die Höhe der zu erzeugenden Strukturen, auf einer sogenannten Substratplatte 3b positioniert werden, wobei die Dimensionen der Metallfolie 1 in etwa den Dimensionen der Substratplatte 3b entsprechen. Anschließend können sowohl die Substratplatte wie auch der Stempel 3a, in dem die zu übertragenen Mikrostrukturen vorhanden sind, auf die Prägetemperatur, beispielsweise eine Temperatur von < 320 °C, aufgeheizt werden. Sobald die Prägetemperatur erreicht ist, beginnt das Prägen, wobei bei einer konstanten Prägerate der Stempel 3a sowie die Substratplatte 3b gegeneinander bewegt werden, bis die voreingestellte maximale Prägekraft erreicht ist. Die relative Bewegung zwischen dem Stempel 3a und der Substratplatte 3b wird durch diese konstante Prägekraft bestimmt. Währenddessen fließt die Metallfolie 1 unter dem konstanten Druck. Aufgrund dieses Fließens nimmt die Dicke der Metallfolie mit zunehmender Zeitdauer des Verbleibens in der Prägevorrichtung. Während des Prägeprozesses wird die Temperatur konstant gehalten. Weiterhin ist es möglich, während des isothermen Prägeprozesses ein Vakuum anzulegen, um ein komplettes Auffüllen der Kavitäten des Stempels zu ermöglichen, was besonders bei statischen Prägevorgängen mit einem flachen Stempel von Vorteil ist, um die Bildung von Lufteinschlüssen zwischen Stempel und den geprägten Strukturen zu vermindern oder zu vermeiden. Bei dynamischen Prägen, z. B. bei Rolle-zu-Rolle-Prägeverfahren mit Walzen als Stempeln ist das Anlegen eines Vakuums nicht unbedingt notwendig, da die Luft vor allem bei der Erzeugung von am Rand der Metallfolien offenen Mikrostrukturen dort entweichen kann. Nach Ablauf der Prägezeit beginnt die Abkühlung des Stempels und der Substratplatte, wobei insbesondere die Prägekraft noch aufrechterhalten wird. Nach dem Abkühlen wird die geprägte Metallfolie durch eine Relativbewegung zwischen der Substratplatte und der geprägten Metallfolie entformt. Während dieses Schrittes spielt die Adhäsion der Restschicht der Metallfolie an der Substratplatte eine wichtige Rolle. Unter Restschicht wird dabei die Dicke der Metallfolie verstanden, die nach der Umformung vorliegt. Eine höhere Adhäsion der zurückbleibenden Schicht auf der Substratplatte stellt sicher, dass die Mikrostrukturen in vertikaler Richtung entformt werden können, was das Risiko von Beschädigungen verringert. Das Entformen ist der kritischste Prozessschritt des Heißprägens. Das Entformen ist besonders wichtig bei einer Verringerung der Strukturgröße bei Mikrostrukturen wegen des zunehmenden Einflusses der Schrumpfung des

Materials. Eine Schrumpfung kann insbesondere im Größenbereich der Strukturgröße der Mikrostrukturen erfolgen und erhöht daher das Risiko von Beschädigungen von freistehenden Mikrostrukturen. Der Effekt der Schrumpfung ist auch eine Funktion der Prozessparameter während des Prägeprozesses, insbesondere der Prägekraft und der Prägetemperatur. Wird die Metallfolie, insbesondere die Aluminiumfolie, bei Heißprägebedingungen, das heißt im geprägten Zustand, als Newton'sche Flüssigkeit betrachtet, so kann für ein einfaches Prägemodell zwischen parallelen Platten die Prägekraft durch die folgende Gleichung definiert werden:

$$F = \frac{3}{2}\frac{\eta \pi R^4}{h_0^3}\frac{dz}{dt}$$

wobei F die Prägekraft ist, $\eta$ ist die Viskosität des Materials, R ist der Durchmesser der Platte, $h_0$ ist die Dicke des zu prägenden Materials und $\frac{dz}{dt}$ stellt die Umformgeschwindigkeit dar, die Geschwindigkeit, mit der das Material der Metallfolie in die Kavitäten bzw. Mikrostrukturen des Stempels hineinfließt . Aufgrund dieser Zusammenhänge ist es klar, dass die Prägekraft sowohl mit abnehmender Dicke als auch mit zunehmender Fläche des zu prägenden Materials zunimmt.

Für einfache sich wiederholende regelmäßige Strukturen in Elektrodenfolien ist insbesondere ein Rolle-zu-Rolle-Fertigungsprozess als kontinuierliches Verfahren sehr wirtschaftlich, bei dem die Elektrodenfolien, die Metallfolien zwischen zwei rotierenden Walzen unter Druck und eventuell unter Erhitzen auf eine Prägetemperatur hindurchgeführt werden, sodass ein kontinuierlicher Prägevorgang durchgeführt werden kann.

Durch gezielte Durchbohrung der Metallfolien lassen sich mehrlagige Elektroden, z. B. Anodenfolien verwirklichen, bei denen beispielsweise eine zentrale Folie von zwei weiteren Folien auf deren jeweiligen Hauptoberflächen flankiert wird. Durch die Durchbohrungen hindurch können alle Lagen der Folien mit dem Elektrolyten benetzt werden.

Ein derartiges kontinuierliches Rolle-zu-Rolle-Verfahren ist schematisch im Querschnitt in Figur 4a gezeigt, wobei zwei Rollen 3 mit Mikrostrukturen 2 gegeneinander rotieren und unter Druck eine Metallfolie 1 hindurchgeführt wird, wobei die Strukturen 2 auf der Metallfolie als Elektrodenfolie besonders einfach erzeugt werden. Die Pfeile geben dabei schematisch die Rotation der Walzenstempel und die Bewegung der Metallfolie 1 an.

Figur 4b zeigt rasterelektronenmikroskopische Aufnahmen von regelmäßigen Mikrostrukturen in Aluminiumelektrodenfolien mit einer Dicke von 120 $\mu$m in der Aufsicht (linke Abbildung) und im Querschnitt (rechte Abbildung). Im Gegensatz zu dem in den Figuren 2a gezeigten regelmäßigen Gräben werden hier regelmäßige Vertiefungen mit viereckigem Querschnitt in der Aufsicht auf die Hauptoberfläche der Metallfolie erzeugt, wobei sich die Querschnitte der Mikrostrukturen zum Inneren der Elektrodenfolie hin verjüngen.

Figur 5 zeigt schematisch im Querschnitt einen Kondensator, beispielsweise einen Aluminium-Elektrolytkondensator, bei dem eine erfindungsgemäße Elektrodenfolie 1 zum Einsatz kommt. Diese Elektrodenfolie 1 weist die bereits beschriebenen Mikrostrukturen 2 als regelmäßige Gräben sowie eine darauf aufgebrachte Oxidschicht 5 als Dielektrikum auf. Die Elektrodenfolie 1 kann beispielsweise als Anodenfolie eingesetzt werden. Weiterhin ist eine weitere Metallfolie 4 vorgesehen, die als Stromkollektor dienen kann. Zwischen dieser weiteren Metallfolie 4 und der Elektrodenfolie 1 kann insbesondere ein Abstandhalter 7 vorhanden sein, beispielsweise eine Kunststofffolie oder eine Papierfolie, die mit einem Elektrolyt 6 getränkt ist. Der Elektrolyt kann zusammen mit der weiteren Elektrodenfolie 4 als Stromkollektor als Gegenelektrode zur Elektrodenfolie 1, also insbesondere als Kathode, fungieren. Dabei kann die weitere Elektrodenfolie 4 anders ausgestaltet sein als die Elektrodenfolie 1 oder auch genauso aufgebaut sein. Insbesondere kann die weitere Elektrodenfolie 4 auch eine Aluminiumfolie mit hoher Oberfläche sein, wobei aber die Formierschicht nicht vorhanden sein muss.

Aufgrund der erhöhten regelmäßigen Oberfläche der Elektrodenfolie 1 weisen derartige Elektrolytkondensatoren eine erhöhte Kapazität und eine erhöhte Stabilität auf. Mit der vorhandenen Technologie unter Einsatz von $Al_2O_3$ als Metalloxidschicht (Dielektrikum) lassen sich bei Metallfolien, insbesondere Aluminiumfolien Kapazitätswerte von > 0,2 $\mu$F/cm$^2$ bei 900 Volt Formierung erreichen, wobei die Dicke der Metallfolien < 80 $\mu$m betragen sollte. Insbesondere lassen sich derartige Elektrolytkondensatoren besonders einfach auch als Elektrodenwickel realisieren, bei denen die Elektrodenfolie von Rollen abgewickelt werden und einer höheren mechanischen Beanspruchung unterliegen. Erfindungsgemäße Elektrodenfolien können aufgrund ihrer erhöhten mechanischen Stabilität dieser Rolle-zu-Rolle-Fertigungsverfahren ausgesetzt werden, ohne dass mit mechanischen Beschädigungen zu rechnen ist. Alternativ zu diesem Rolle-zu-Rolle-Fertigungsverfahren können die erfindungsgemäßen Elektrodenfolien auch bei Kondensatoren bevorzugt eingesetzt werden, die durch Stapeln von Elektrodenfolien übereinander hergestellt werden.

Als Elektrolytlösungen für die Elektrolytkondensatoren, insbesondere Aluminium-Elektrolytkondensatoren können beliebige herkömmliche Elektrolytlösungen eingesetzt werden, beispielsweise Elektrolytlösungen, die als Lösungsmittel Ethylenglykol sowie als Leitsalz Ammoniumpentaborat $NH_4B_5O_8$ enthalten. Diese Elektrolytlösungen können noch weitere Additive enthalten. Alternativ können auch Elektrolytlösungen verwendet werden, die als Lösungsmittel zumindest teilweise Wasser enthalten. Erfindungsgemäße Elektrodenfolien können auch bei Kondensatoren eingesetzt werden, die als Elektrolyten wasserfreie ionische Flüssigkeiten oder aber besonders günstig auch Feststoffe umfassen.

## Patentansprüche

**1.** Verfahren zur Herstellung von Elektrodenfolien (1) für Kondensatoren (10), umfassend die Verfahrensschritte:

A) Breitstellen einer Metallfolie (1)
B) Übertragen von auf einem Stempel (3, 3a) befindlichen Mikrostrukturen (2) auf eine Hauptoberfläche der Metallfolie durch Umformen,

mit einem auf den Verfahrensschritt B) folgenden Verfahrensschritt C)Erzeugen einer Metall-Oxidschicht (5) auf der Metallfolie (1),
wobei

- die Elektrodenfolien (1) nicht durchbrochen werden,
- im Verfahrensschritt B) die Mikrostrukturen (2) mit Gräben mit einem Aspektverhältnis von zumindest 4:1 erzeugt werden und
- im Verfahrensschritt B) die Gräben mit einer Tiefe von zumindest 20 μm und einer Breite von höchstens 5 μm erzeugt werden.

**2.** Verfahren zur Herstellung von Elektrodenfolien (1) für Kondensatoren (10) nach dem vorhergehenden Patentanspruch, wobei im Verfahrensschritt A) eine Metallfolie umfassend oder bestehend aus einem Ventilmetall verwendet wird.

**3.** Verfahren nach einem der vorhergehenden Patentansprüche wobei im Verfahrensschritt B) die Metallfolie (1a) zwischen zwei Stempeln (3) positioniert wird und die auf beiden Stempeln befindlichen Mikrostrukturen (2) auf die Hauptoberflächen der Metallfolie durch Pressen übertragen werden.

**4.** Verfahren zur Herstellung von Elektrodenfolien (1) für Kondensatoren (10) nach einem der vorhergehenden Patentansprüche, ausgebildet als kontinuierliches Verfahren, wobei im Verfahrensschritt B) die Metallfolie (1a) zwischen zwei rotierenden Walzen als Stempel (3) hindurchgeführt wird und dabei die Mikrostrukturen (2) auf zumindest eine Hauptoberfläche der Metallfolie übertragen wird.

**5.** Verfahren nach einem der vorhergehenden Patentansprüche, wobei im Verfahrensschritt B) regelmäßige Mikrostrukturen erzeugt werden.

**6.** Verfahren nach einem der vorhergehenden Patentansprüche, wobei im Verfahrensschritt B) die Stempel bei einer Temperatur von unter 400°C, bevorzugt unter 200°C, weiter bevorzugt kleiner 100°C gegen die Metallfolie gepresst werden, wobei die Temperatur auch Raumtemperatur betragen kann.

**7.** Verfahren nach einem der vorhergehenden Patentansprüche, wobei im Verfahrensschritt B) die Stempel und die Metallfolie mit einem Druck von 10 bis 100 MPa, gegeneinander gepresst werden.

**8.** Verfahren nach einem der vorhergehenden Patentansprüche, wobei im Verfahrensschritt A) eine Metallfolie mit einer kristallinen, z. B. kubischen Textur von < 90%, bevorzugt < 50 %, weiter bevorzugt ohne Textur bereitgestellt wird.

**9.** Verfahren nach einem der vorhergehenden Patentansprüche, wobei im Verfahrensschritt A) eine Metallfolie mit einer Reinheit von > 95%, bevorzugt > 98% bereitgestellt wird.

**10.** Verfahren nach einem der vorhergehenden Patentansprüche, wobei im Verfahrensschritt A) eine Metallfolie mit einer Dicke von zumindest 120 μm, bevorzugt zumindest 100 μm, am meisten bevorzugt zumindest 80 μm bereitgestellt wird.

11. Verfahren nach einem der vorhergehenden Patentansprüche, wobei im Verfahrensschritt B) Mikrostrukturen (2) als eine Vielzahl von Vertiefungen auf die Hauptoberfläche der Metallfolie übertragen werden.

12. Elektrodenfolie für Kondensatoren, umfassend:

- Eine Metallfolie ohne Durchbrüche mit einer Metall-Oxidschicht und regelmäßigen Mikrostrukturen auf zumindest einer Hauptoberfläche,

wobei

- die Mikrostrukturen (2) Gräben mit einem Aspektverhältnis von zumindest 4:1 aufweisen,
- die Gräben eine Tiefe von zumindest 20 μm und einer Breite von höchstens 5 μm aufweisen.

13. Elektrodenfolie für Kondensatoren nach dem vorhergehenden Patentanspruch, wobei die Metallfolie ein Ventilmetall umfasst oder daraus besteht.

14. Elektrodenfolie nach einem der Patentansprüche 12 bis 13, wobei die Metallfolie eine kristalline (kubische) Textur von < 90%, bevorzugt < 80 %, weiter bevorzugt texturlos ist.

15. Elektrodenfolie nach einem der Patentansprüche 12 bis 14, wobei über den Mikrostrukturen eine MetalloxidSchicht angeordnet ist.

16. Elektrodenfolie nach einem der Patentansprüche 12 bis 15, wobei die Mikrostrukturen als eine Vielzahl von Vertiefungen vorliegen.

17. Elektrolytkondensator (10), umfassend:

- Eine Elektrodenfolie nach einem der Ansprüche 12 bis 16 als erste Elektrode (1),
- Eine weitere Metallfolie (4) als Stromkollektor für eine zweite Elektrode und
- Eine Elektrolytlösung (6), die zwischen der ersten Elektrode und dem Stromkollektor der zweiten Elektrode angeordnet ist.

## Claims

1. Method for producing electrode foils (1) for capacitors (10), comprising the method steps of:

A) providing a metal foil (1),
B) transferring microstructures (2) located on a stamping die (3, 3a) to a main surface of the metal foil by a reforming process,
with a method step C) following the method step B) of producing a metal oxide layer (5) on the metal foil, (1) wherein

- the electrode foils (1) are not perforated,
- in method step B) the microstructures (2) are produced with trenches with an aspect ratio of at least 4:1 and
- in method step B) the trenches with a depth of at least 20 μm and a width of at most 5 μm are produced.

2. Method for producing electrode foils (1) for capacitors (10) according to the preceding patent claim, a metal foil comprising or consisting of a valve metal being used in method step A).

3. Method according to one of the preceding patent claims, in method step B) the metal foil (1a) being positioned between two stamping dies (3) and the microstructures (2) located on the two stamping dies being transferred onto the main surfaces of the metal foil by pressing.

4. Method for producing electrode foils (1) for capacitors (10) according to one of the preceding patent claims, designed as a continuous process, in method step B) the metal foil (1a) being passed between two rotating rolls as stamping dies (3) and the microstructures (2) thereby transferred onto at least one main surface of the metal foil.

5. Method according to one of the preceding patent claims, in method step B) regular microstructures being produced.

6. Method according to one of the preceding patent claims, in method step B) the stamping dies being pressed against the metal foil at a temperature of below 400°C, preferably below 200°C, more preferably less than 100°C, it also being possible for the temperature to be room temperature.

7. Method according to one of the preceding patent claims, in method step B) the stamping dies and the metal foil being pressed against one another with a pressure of 10 to 100 MPa.

8. Method according to one of the preceding patent claims, in method step A) a metal foil with a crystalline texture, for example a cubic texture, of < 90%, preferably < 50%, more preferably without a texture, being provided.

9. Method according to one of the preceding patent claims, in method step A) a metal foil with a purity of > 95%, preferably > 98%, being provided.

10. Method according to one of the preceding patent claims, in method step A) a metal foil with a thickness of at least 120 μm, preferably at least 100 μm, most preferably at least 80 μm, being provided.

11. Method according to one of the preceding patent claims, in method step B) microstructures (2) being transferred to the main surface of the metal foil as a multiplicity of depressions.

12. Electrode foil for capacitors, comprising:

- a metal foil without perforations with a metal oxide layer and regular microstructures on at least one main surface,

wherein

- the microstructures (2) have trenches with an aspect ratio of at least 4:1,
- the trenches have a depth of at least 20 μm and a width of at most 5 μm.

13. Electrode foil for capacitors according to the preceding patent claim, the metal foil comprising a valve metal or consisting thereof.

14. Electrode foil according to one of Patent Claims 12 to 13, the metal foil comprising a crystalline (cubic) texture of < 90%, preferably < 80%, more preferably no texture.

15. Electrode foil according to one of Patent Claims 12 to 14, a metal oxide layer being arranged over the microstructures.

16. Electrode foil according to one of Patent Claims 12 to 15, the microstructures taking the form of a multiplicity of depressions.

17. Electrolytic capacitor (10), comprising:

- an electrode foil according to one of Claims 12 to 16 as a first electrode (1),
- a further metal foil (4) as a current collector for a second electrode an
- an electrolyte solution (6), which is arranged between the first electrode and the current collector of the second electrode.

## Revendications

1. Procédé de fabrication de feuilles d’électrodes (1) pour condensateurs (10), comprenant les étapes de procédé suivantes :

A) fourniture d’une feuille de métal (1),
B) transfert par formage de microstructures (2) présentes sur un poinçon (3, 3a) à une surface principale de la feuille de métal, par une étape de procédé faisant suite à l’étape de procédé B),
C) créer une couche d’oxyde métallique (5) sur la feuille de métal (1),

dans lequel

- les feuilles d'électrodes (1) ne sont pas percées,
- lors de l'étape de procédé B), les microstructures (2) sont créées de manière à comporter des tranchées présentant un rapport de forme d'au moins 4:1, et
- lors de l'étape de procédé B), les tranchées sont réalisées de manière à présenter une profondeur d'au moins 20 μm et une largeur d'au plus 5 μm.

**2.** Procédé de fabrication de feuilles d'électrodes (1) pour condensateurs (10) selon la revendication précédente, dans lequel, lors de l'étape de procédé A), une feuille de métal comprenant ou consistant en un métal de soupape est utilisée.

**3.** Procédé selon l'une des revendications précédentes, dans lequel, lors de l'étape de procédé B), la feuille de métal (1a) est positionnée entre deux poinçons (3) et les microstructures (2) présentes sur les deux poinçons sont transférées par pressage sur les surfaces principales de la feuille de métal.

**4.** Procédé de fabrication de feuilles d'électrodes (1) pour condensateurs (10) selon l'une des revendications précédentes, mis en oeuvre sous la forme d'un procédé en continu, dans lequel, lors de l'étape de procédé B), la feuille de métal (1a) est amenée à passer entre deux rouleaux rotatifs en tant que poinçon (3) et les microstructures (2) sont ainsi transférées sur au moins une surface principale de la feuille de métal.

**5.** Procédé selon l'une des revendications précédentes, dans lequel des microstructures régulières sont créées lors de l'étape de procédé B).

**6.** Procédé selon l'une des revendications précédentes, dans lequel, lors de l'étape de procédé B), les poinçons sont pressés contre la feuille de métal à une température inférieure à 400°C, de préférence inférieure à 200°C, et plus préférablement inférieure à 100°C, dans lequel la température peut également être la température ambiante.

**7.** Procédé selon l'une des revendications précédentes, dans lequel, lors de l'étape de procédé B), les poinçons et la feuille de métal sont pressés l'un contre l'autre sous une pression pouvant atteindre 100 MPa.

**8.** Procédé selon l'une des revendications précédentes, dans lequel, lors de l'étape de procédé A), on fournit une feuille de métal ayant une texture cristalline, par exemple cubique, de < 90%, de préférence < 50%, et plus préférablement sans texture.

**9.** Procédé selon l'une des revendications précédentes, dans lequel, lors de l'étape de procédé A), on fournit une feuille de métal ayant une pureté de > 95 %, de préférence > 98 %.

**10.** Procédé selon l'une des revendications précédentes, dans lequel, lors de l'étape de procédé A), on fournit une feuille de métal ayant une épaisseur d'au moins 120 μm, de préférence d'au moins 100 μm, et plus préférablement, d'au moins 80 μm.

**11.** Procédé selon l'une des revendications précédentes, dans lequel, lors de l'étape de procédé B), des microstructures (2) sont transférées sous la forme d'une pluralité de creux sur la surface principale de la feuille de métal.

**12.** Feuille d'électrode pour condensateurs, comprenant :

- une feuille de métal sans orifices traversants comportant une couche d'oxyde métallique et des microstructures régulières sur au moins une surface principale,

dans laquelle

- les microstructures (2) comportent des tranchées présentant un rapport de forme d'au moins 4:1,
- les tranchées présentent une profondeur d'au moins 20 μm et une largeur d'au plus 5 μm.

**13.** Feuille d'électrode pour condensateurs selon la revendication précédente du brevet, dans laquelle la feuille de métal comprend ou consiste en un métal de soupape.

**14.** Feuille d'électrode selon l'une des revendications 12 à 13, dans laquelle la feuille de métal présente une texture cristalline (cubique) de < 90%, de préférence < 80%, et plus préférablement sans texture.

**15.** Feuille d'électrode selon l'une des revendications 12 à 14, dans laquelle une couche d'oxyde métallique est disposée sur les microstructures.

**16.** Feuille d'électrode selon l'une des revendications 12 à 15, dans laquelle les microstructures sont présentes sous la forme d'une pluralité de creux.

**17.** Condensateur électrolytique (10) comprenant :

- une feuille d'électrode selon l'une des revendications 12 à 16 en tant que première électrode (1),
- une autre feuille de métal (4) en tant que collecteur de courant pour une seconde électrode et
- une solution d'électrolyte (6) disposée entre la première électrode et le collecteur de courant de la seconde électrode.

FIG 1a

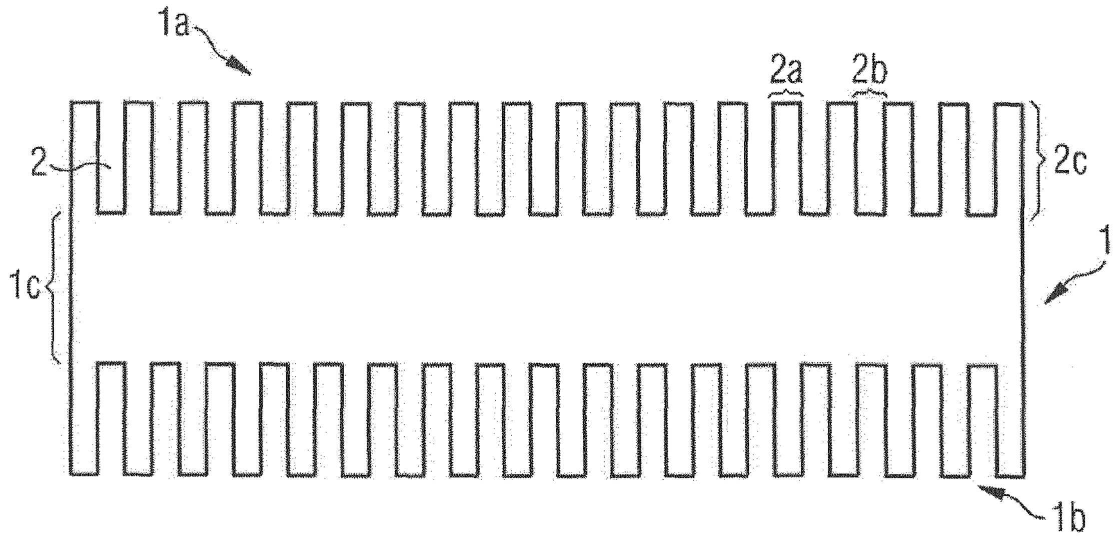


FIG 1b

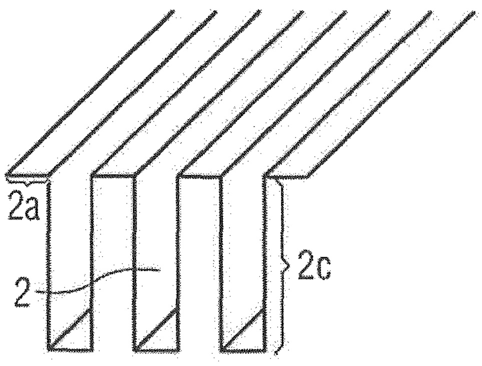


FIG 1c

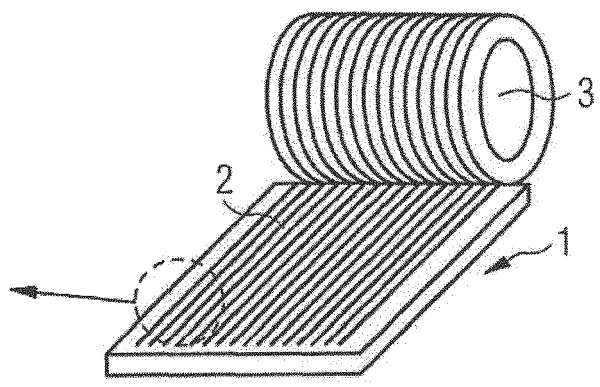

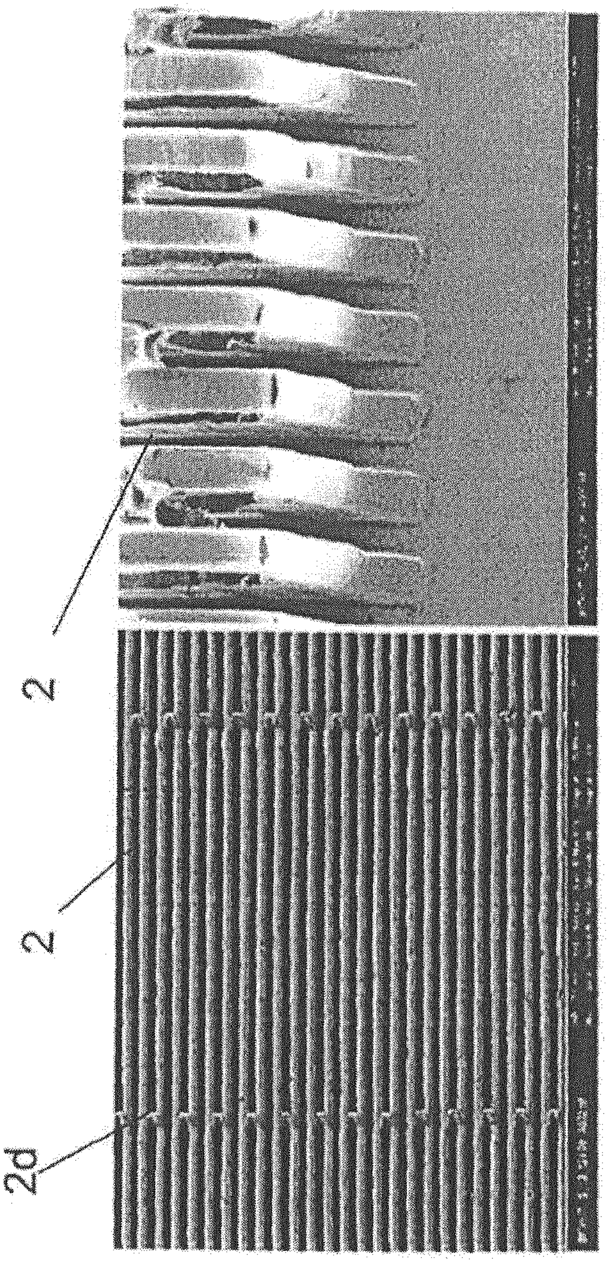

2d 2 2

Fig. 2a

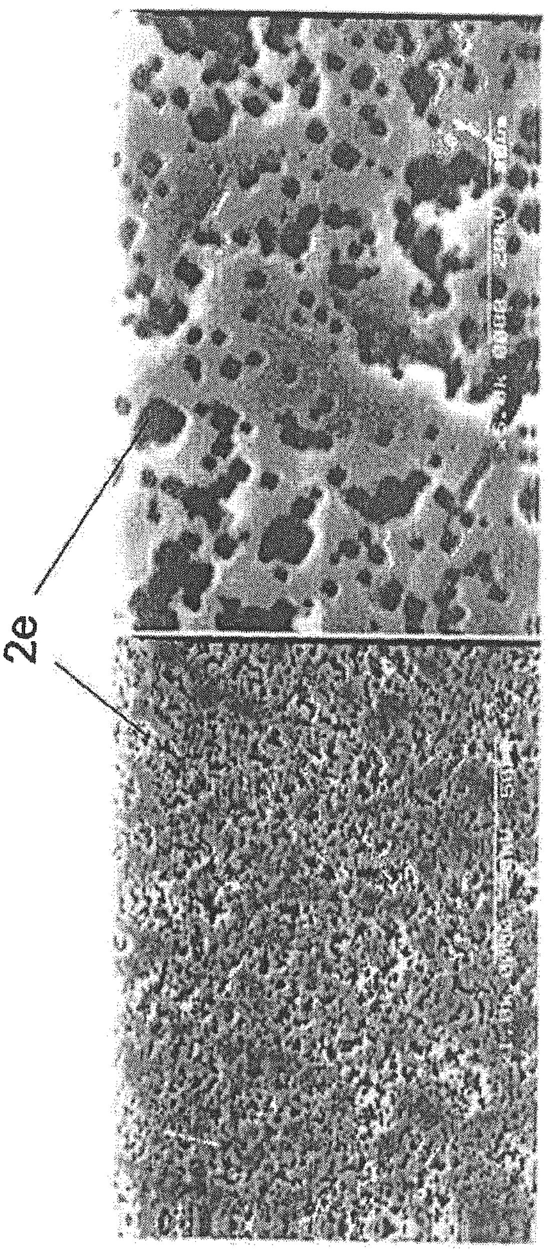

2e

Fig. 2b

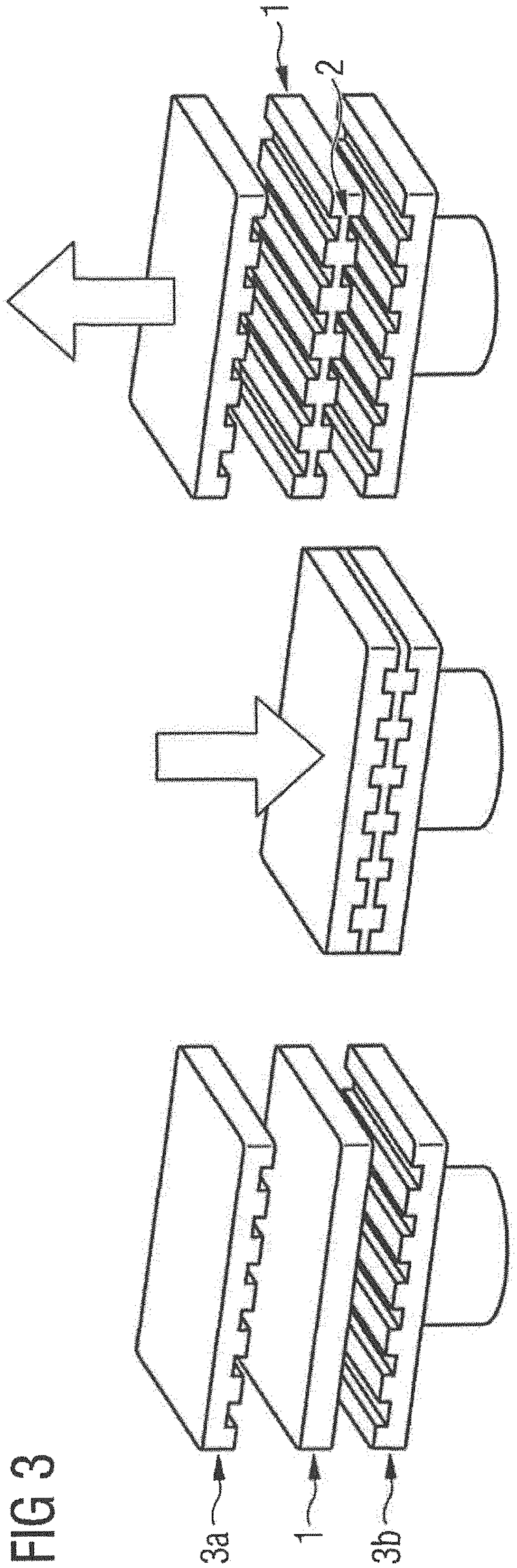


FIG 3

FIG 4a

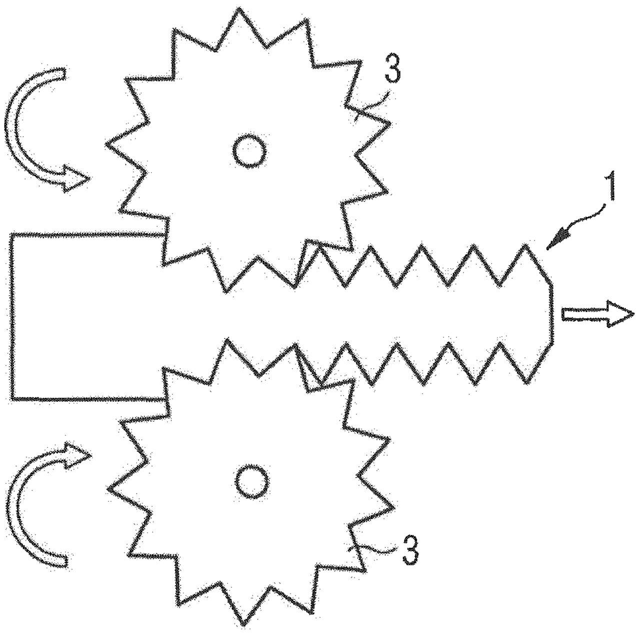


Fig. 4b

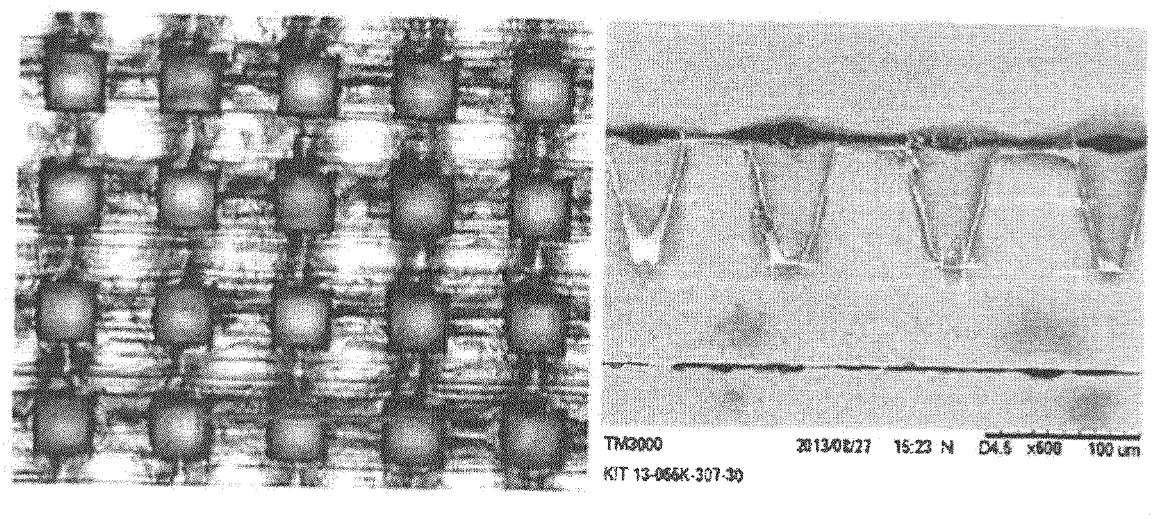

FIG 5

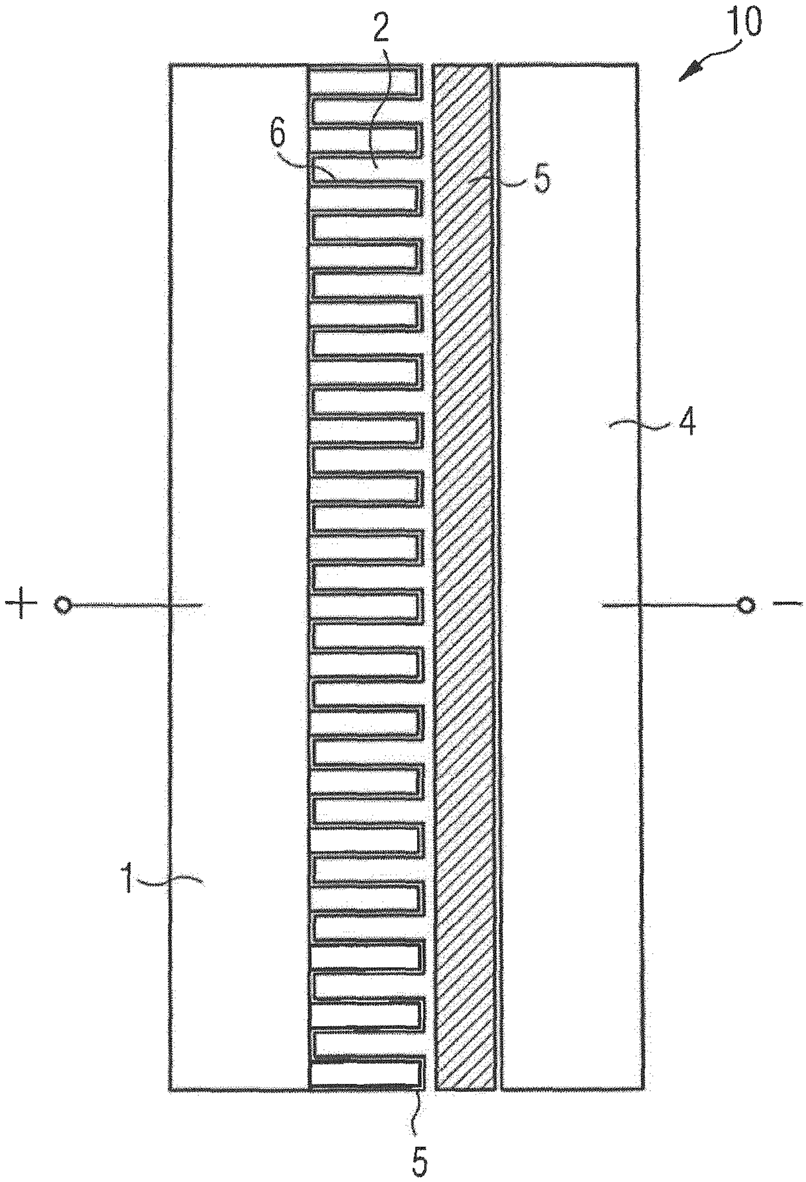

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20120219817 A1


### In der Beschreibung aufgeführte Nicht-Patentliteratur


- **E. W. BECKER ; W. EHRFELD ; P. HAGMANN ; A. MANA ; D. MÜNCHMEIER.** Fabrication of microstructures with high aspect ratios and great structural heights by synchrotron radiation lithography, galvano forming, and plastic molding (LIGA process). *Microelectronic Engineering,* 1986, vol. 4 (1), 35-56
- **T. MAPPES ; M. WORGULL ; M. HECKELE ; J. MOHR.** Submicron polymer structures with X-ray lithography and hot embossing. *Microsyst. Technol.,* 2008, vol. 14, 1721-1725
- **M. WORGULL ; M. HECKELE.** New aspects of simulation in hot embossing. *Microsyst. Technol.,* 2004, vol. 10, 432-437
- Großformatige Abformung mikrostrukturierter Formeinsätze durch Heißprägen. **CHRISTIAN MEHNE.** Dissertation. Universität Karlsruhe (TH) Fakultät für Maschinenbau, Universitätsverlag Karlsruhe, 2007
- **F. J. HUMPHRIES.** Review grain and subgrain characterisation by electron backscatter diffraction. *Journal of Material Science,* 2001, vol. 36 (16), 3833-3854